# EUROPEAN PATENT SPECIFICATION

(11) **EP 4 328 582 B1**
(45) Date of publication and mention of the grant of the patent: **30.09.2026**
(21) Application number: 22791324.1
(22) Date of filing: 02.02.2022
(51) Int. Cl.: G01N 30/46, G01N 30/60

(54) **CHROMATOGRAPH**
CHROMATOGRAPH
CHROMATOGRAPHE

(30) Priority: 22.04.2021 JP 2021072572
(43) Date of publication of application: 28.02.2024
(60) Divisional application: 26200955.8
(73) Proprietor: HITACHI HIGH-TECH CORPORATION, Tokyo 105-6409 (JP)
(72) Inventor: SHIMIZU Yusuke, Tokyo 105-6409 (JP); IIJIMA Yu, Tokyo 105-6409 (JP); YAMASHITA Taichiro, Tokyo 100-8280 (JP); MASUDA Ai, Tokyo 100-8280 (JP); FURUKAWA Daichi, Tokyo 100-8280 (JP)
(74) Representative: Strehl & Partner mbB
(86) International application number: PCT/JP2022/004103
(87) International publication number: WO 2022/224539

(56) References cited:
- WO-A1-2014/142096
- WO-A1-2017/199335
- WO-A1-2018/116432
- WO-A1-2020/175651
- JP-A- 2007 078 436
- JP-A- H 034 165
- JP-A- H07 239 325
- JP-A- S50 150 497
- US-B2- 8 307 541

## Description

### Technical Field

This invention relates to a chromatograph.

### Background Art

In a liquid chromatograph (LC), solid phase extraction (SPE), and the like, a sample is separated by a separation column that is filled with a filling agent, so that foreign substance removal and high accuracy and high S/N analysis can be achieved. The separation column is required to be replaced according to the sample to be measured, and is required to be replaced according to the life of the separation column.

As a technique related to the replacement of the separation column, for example, the one described in Patent Literature 1 is known. Patent Literature 1 discloses a separation column connection device that includes: a column holder that holds a separation column; a first fitting holder that is equipped with a first fitting including a seal portion that is coupled to a seal portion on the upstream side of the separation column and to which a pipe on the upstream side is connected; a second fitting holder that is equipped with a second fitting including a seal portion that is coupled to a seal portion on the downstream side of the separation column and to which a pipe on the downstream side is connected; a body member to which one of the first fitting holder and the second fitting holder is fixed; a driving portion that moves, with respect to the body member, the first fitting holder or the second fitting holder, the first fitting holder and the second fitting holder not being fixed to the body member; a guide that guides the column holder to a moving direction by the driving portion; and a resilient body that is provided between the column holder and the second fitting holder.
The document WO 2020/175651 A1 discloses a chromatograph comprising a column cartridge that accommodates a separation column and is detachably provided in a column installation position, with upstream and downstream pipes connected to the column cartridge, and a cover that integrally covers the column installation position. This document represents the closest prior art.

### Citation List

### Patent Literature

Patent Literature 1: WO 2017/199335

### Summary of Invention

### Technical Problem

By the way, when the throughput of the chromatograph is improved, the attaching and detaching operation of the separation column is required to be simplified. In addition, in the attaching and detaching of the separation column, an operator is required to be prevented from being in contact with the liquid left in the flow passage in the pipe, the separation column that is not sufficiently cooled, the mechanism that connects the separation column and the pipe, and the like.

The present invention has been made in view of the above, and an object of the present invention is to provide a chromatograph that allows easy replacement of a separation column while preventing an operator from being in contact with a configuration related to the separation column.

### Solution to Problem

The problem is solved by a chromatograph according to claim 1.

### Advantageous Effects of Invention

According to the present invention, an object of the present invention is to provide a chromatograph that allows easy replacement of a separation column while preventing an operator from being in contact with a configuration related to the separation column.

### Brief Description of Drawings

[FIG. 1] FIG. 1 is a diagram schematically showing a chromatograph of a mass spectrometer together with a related configuration.
[FIG. 2] FIG. 2 is a perspective view showing an extracted column cartridge.
[FIG. 3] FIG. 3 is an exploded perspective view showing a state in which the column cartridge is installed on the chromatograph.
[FIG. 4] FIG. 4 is a side view schematically showing the state in which the column cartridge is installed in the chromatograph.

### Description of Embodiments

One embodiment of the invention will now be described with reference to the drawings.

The present embodiment will be described by exemplifying, as an example of a chromatograph, a liquid chromatograph (LC), but the present invention is not limited to this, and is also applicable to, for example, other chromatographs, such as a high performance liquid chromatograph (HPLC), an ultra-high performance liquid chromatograph (UHPLC), and a gas chromatograph (GC).

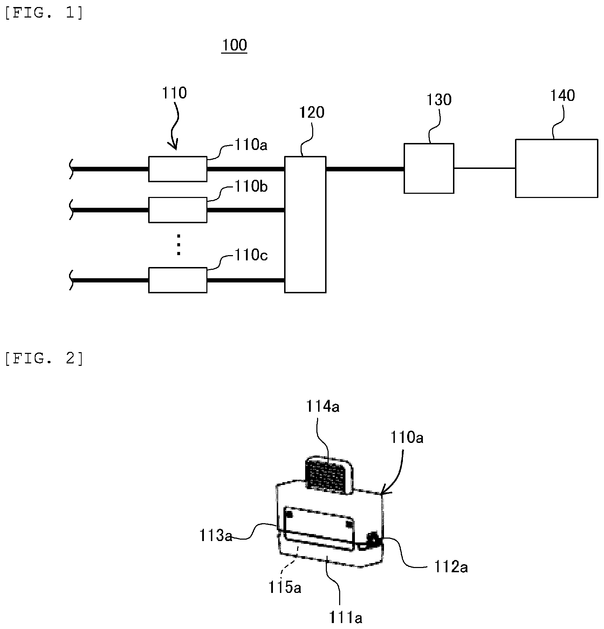

FIG. 1 is a diagram schematically showing a chromatograph of a mass spectrometer together with a related configuration according to the present embodiment.

The present embodiment exemplifies, as an example of the chromatograph, the liquid chromatograph (LC), and a sample (mobile phase) that has been subjected to a pre-process, such as purification/concentration, by a pre-process portion, not shown, is liquid-delivered to the chromatograph by a shipper and a liquid delivery mechanism (a syringe, a liquid delivery pump, an injector, and the like), not shown.

As shown in FIG. 1, a mass spectrometer 100 includes a chromatograph 110, a switching device 120, a detector 130, and a control device 140.

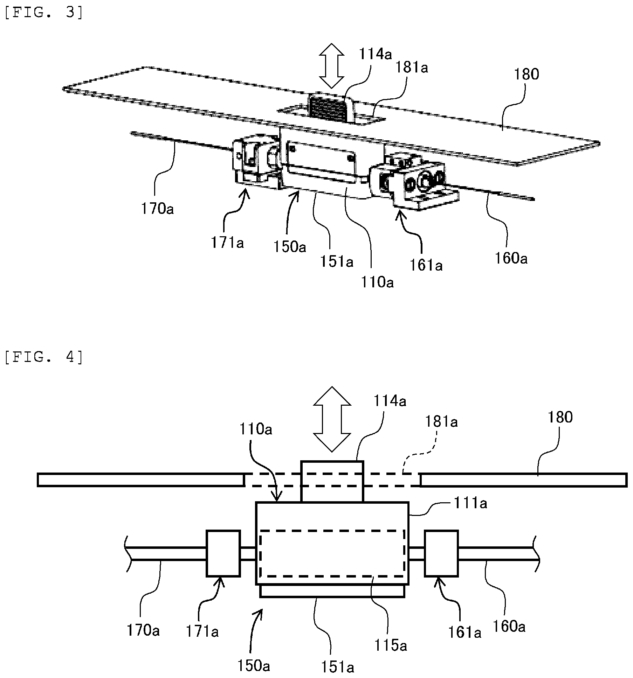

The chromatograph 110 is, for example, the liquid chromatograph, and a plurality of column cartridges 110a to 110c each incorporating a separation column 115a described later (see FIG. 4) are disposed.

The switching device 120 is a stream select valve that selectively switches the connection of the plurality of the column cartridges 110a to 110c and the detector 130, and the sample (mobile phase) through, among the plurality of the column cartridges 110a to 110c, the column cartridge 110a, 110b, or 110c that has been selected by the switching device 120 is liquid-delivered to the detector 130. The flow passages related to the respective column cartridges 110a to 110c have the same configuration, and are disposed in parallel.

The detector 130 is a mass spectrometer, and for example, a triple quadrupole mass spectrometer is used. The triple quadrupole mass spectrometer includes a feature of being excellent in quantitativeness. It should be noted that the mass spectrometer is not necessarily required to be the triple quadrupole mass spectrometer (Triple Q-MS), and may be an ion trap mass spectrometer (Iontrap-MS) and a time-of-flight mass spectrometer (TOF-MS). In addition, the detector 130 is not necessarily required to be the mass spectrometer, and may be a diode array detector, an UV detector, and a fluorescence detector.

The control device 140 controls the entire operation of the mass spectrometer 100, and is, for example, a PC (personal computer), a driver for the mass spectrometer, and the like. The control device 140 has: a storing portion that stores a program, various settings, other information necessary for analysis (for example, the physical properties information (the viscosity and the like) of the sample), and the like; a controlling portion that performs the calculation of a control signal and the like by using the program and the like stored in the storing portion; and each function portion, such as a signal outputting portion that outputs the control signal to each portion of the automatic analyzer to drive the each portion of the automatic analyzer, and the control device 140 controls the operation of the mass spectrometer 100 on the basis of an instruction and information from an input device, not shown. The control device 140 adjusts time of the equilibration step, the elution step, the cleaning step of the analyzing column, and the cleaning step of an injector and the like, and introduces into the detector 130, the sample (mobile phase) through the chromatograph 110 without interruption from one of the plurality of the column cartridges 110a to 110c, thereby enabling the standby time (time during which the analysis is not performed) of the detector 130 to be reduced.

Here, the chromatograph 110 will be described in detail with reference to the drawings. It should be noted that in the present embodiment, among the plurality of the column cartridges 110a to 110c, the column cartridge 110a will be representatively described, and other column cartridges 110b and 110c have the same configuration as the column cartridge 110a.

FIG. 2 is a perspective view showing an extracted column cartridge. FIG. 3 is an exploded perspective view showing a state in which the column cartridge is installed on the chromatograph, and FIG. 4 is a side view schematically showing the state in which the column cartridge is installed in the chromatograph.

As shown in FIG. 2, the column cartridge 110a schematically includes: a body 111a that accommodates the separation column 115a, a handle 114a that is provided to protrude from the upper portion of the body 111a; an upstream connection portion 112a in which an upstream pipe 160a described later (see FIGs. 3 and 4) is connected to the separation column 115a in the interior of the column cartridge 110a; and a downstream connection portion 113a in which a downstream pipe 170a described later (see FIGs. 3 and 4) is connected to the separation column 115a in the interior of the column cartridge 110a.

In the separation column 115a, for example, a filling agent having an inside diameter of 1.0 mm, a length of 50 mm, and a particle diameter of 2. 6 mm is filled and incorporated as a stationary phase. For the separation mode of the separation column 115a, a reverse phase mode, a normal phase mode, a molecular weight cut-off mode, an HILIC mode, an antigen-antibody reaction mode, and the like may be used.

As shown in FIGs. 3 and 4, the column cartridge 110a is detachably provided in a column installation position 150a of the chromatograph 110.

At the column installation position 150a, disposed are the upstream pipe 160a that is detachably provided on the upstream connection portion 112a of the column cartridge 110a in a state of being installed at the column installation position 150a, and configured to supply the mobile phase to the separation column 115a that is accommodated in the column cartridge 110a, the downstream pipe 170a that is detachably provided on the downstream connection portion 113a of the column cartridge 110a in a state of being installed at the column installation position 150a, and configured to deliver the sample (mobile phase) that has passed through the separation column 115a that is accommodated in the column cartridge 110a, and a column oven 151a that temperature adjusts the analyzing column.

The upstream pipe 160a includes an upstream pipe movement mechanism 161a configured to move the upstream pipe 160a in an axial direction to attach and detach the upstream pipe 160a to and from the upstream connection portion 112a of the column cartridge 110a in the state of being installed at the column installation position 150a. In addition, the downstream pipe 170a includes a downstream pipe movement mechanism 171a configured to move the downstream pipe 170a in the axial direction to attach and detach the downstream pipe 170a to and from the column cartridge 110a in the state of being installed at the column installation position 150a. The upstream pipe movement mechanism 161a and the downstream pipe movement mechanism 171a are, for example, electric actuators, such as electric motors (including rack and pinion systems and the like), controlled by the control device 140.

In addition, the chromatograph 110 includes a cover 180 that integrally covers the column installation position 150a, the upstream pipe 160a, and the downstream pipe 170a to separate an inner side and an outer side from each other. The cover 180 is provided with an insertion hole 181a that penetrates the cover 180 and allows the column cartridge 110a to be installed from the outer side of the cover 180 to the column installation position 150a.

For example, the column cartridge 110a is disposed to the column installation position 150a of the chromatograph 110 in such a manner that an operator inserts the column cartridge 110a into the insertion hole 181a of the cover 180 in a state where the operator holds the handle 114a. In the case of detecting the arrangement of the column cartridge 110a to the column installation position 150a by a sensor and the like, or by performing the operation indicating the installation completion by the operator, the upstream pipe 160a and the downstream pipe 170a are connected to the column cartridge 110a by the upstream pipe movement mechanism 161a and the downstream pipe movement mechanism 171a, and the installation of the column cartridge 110a to the column installation position 150a (that is, the chromatograph 110) is completed.

In addition, when the column cartridge 110a is installed at the column installation position 150a (that is, the chromatograph 110), for example, the operator performs the taking-out start operation of the column cartridge 110a, so that the upstream pipe 160a and the downstream pipe 170a are disconnected from the column cartridge 110a by the upstream pipe movement mechanism 161a and the downstream pipe movement mechanism 171a. Then, in this state, for example, the operator pulls out the column cartridge 110a via the insertion hole 181a of the cover 180 in a state where the operator holds the handle 114a, so that the column cartridge 110a is taken out from the column installation position 150a (that is, the chromatograph 110).

It should be noted that the present embodiment has been described by exemplifying the case where the insertion hole 181a is configured in the open state, but the present invention is not limited to this. For example, a cover member that covers the insertion hole 181a from the down side (the inner side) and is provided to be retractable from the insertion hole 181a by being turned to the down side may be provided, and the cover member may be held to the posture that covers the insertion hole 181a by a spring and the like. By configuring the cover member in this way, when the column cartridge 110a is not installed at the column installation position 150a, the cover member covers the insertion hole 181a, so that dust and the like can be prevented from entering the interior of the cover 180 via the insertion hole 181a, and the operator can be prevented from being in contact with the inner configuration of the cover 180. In addition, the force by the insertion of the column cartridge 110a into the insertion hole 181a becomes large with respect to the urging force of the spring and the like to the cover member, so that with the insertion of the column cartridge 110a into the insertion hole 181a, the cover member is retracted from the position where the cover member covers the insertion hole 181a, whereby the installation of the column cartridge 110a to the column installation position 150a is not inhibited.

In addition, the present embodiment has been described by exemplifying the case where the column cartridge 110a is taken out from the column installation position 150a by holding and pulling out the handle 114a of the column cartridge 110a by the operator, but the present invention is not limited to this. For example, in a state where the upstream pipe 160a and the downstream pipe 170a are separated from the column cartridge 110a, the column cartridge 110a may be pushed out upward from the column installation position 150a via the insertion hole 181a by the depressing operation of the button that is provided outside of the cover 180.

In addition, the present embodiment has been described by exemplifying the case where the upstream pipe movement mechanism 161a and the downstream pipe movement mechanism 171a are the electric actuators and the like, but the present invention is not limited to this. For example, the upstream pipe movement mechanism 161a and the downstream pipe movement mechanism 171a may be configured so that the upstream pipe 160a and the downstream pipe 170a are attached and detached to and from the column cartridge 110a by the tilting operation of the lever provided outside of the cover 180, the turning operation of the handle provided outside of the cover 180, and the like.

In addition, the present embodiment has been described by exemplifying the case where the upstream pipe 160a and the downstream pipe 170a are attached and detached, by the upstream pipe movement mechanism 161a and the downstream pipe movement mechanism 171a, to and from the column cartridge 110a which is disposed at the column installation position 150a, but the present invention is not limited to this. For example, the upstream pipe 160a may be fixed, and the column cartridge 110a and the upstream pipe 160a may be connected with each other with the arrangement of the column cartridge 110a to the column installation position 150a, and after the installation of the column cartridge 110a to the column installation position 150a, the downstream pipe 170a may be connected to the column cartridge 110a by the downstream pipe movement mechanism 171a. The upstream configuration and the downstream configuration may be replaced with each other. In addition, this is the same for the taking-out of the column cartridge 110a from the column installation position 150a.

Various installation modes of the column cartridge 110a to the column installation position 150a can be considered, but for example, the column oven 151a is formed to have a shape that is convex upward, and the column cartridge 110a that has a bottom portion (the portion on the opposite side of the handle 114a) formed with a concave shape that is engaged with the column oven 151a is disposed to the column installation position 150a, so that the column cartridge 110a is disposed with high accuracy to the predetermined position of the column installation position 150a. In addition, the column cartridge 110a and the column oven 151a are in closer contact with each other, so that the temperature adjustment of the separation column 115a that is accommodated in the column cartridge 110a can be performed with higher accuracy.

Other column cartridges 110b and 110c have the same configuration at the column installation position. That is, the flow passages related to the respective column cartridges 110a to 110c have the same configuration, and in addition, are disposed in parallel. The column installation position corresponding to each of the column cartridges 110a to 110c, the upstream pipe, and the downstream pipe are integrally covered by the cover 180 that separates the inner side and the outer side from each other. The cover 180 has a plurality of the insertion holes that penetrate the cover 180 and allow the column cartridges 110a to 110c to be installed from the outer side of the cover 180 to the respective column installation positions corresponding to the respective column cartridges 110a to 110c.

The effects of the present embodiment configured as above will be described.

When the throughput of the chromatograph is improved, the attaching and detaching operation of the separation column is required to be simplified. In addition, in the attaching and detaching of the separation column, the operator is required to be prevented from being in contact with the liquid left in the flow passage in the pipe, the separation column that is not sufficiently cooled, the mechanism that connects the separation column and the pipe, and the like.

With respect to this, in the present embodiment, the chromatograph 110 includes: the separation column 115a that incorporates the stationary phase, the column cartridge 110a that accommodates the separation column 115a and is detachably provided in the predetermined column installation position 150a; the upstream pipe 160a that is detachably provided on the column cartridge 110a in a state of being installed at the column installation position 150a, and configured to supply the mobile phase to the separation column 115a of the column cartridge 110a; the downstream pipe 170a that is detachably provided on the column cartridge 110a in a state of being installed at the column installation position 150a, and configured to deliver the mobile phase that has passed through the separation column 115a of the column cartridge 110a; and the cover 180 that integrally covers the column installation position 150a, the upstream pipe 160a, and the downstream pipe 170a to separate the inner side and the outer side of the cover 180 from each other. The cover 180 has the insertion hole 181a that penetrates the cover 180 and allows the column cartridge 110a to be installed from the outer side of the cover 180 to the column installation position 150a. Thus, easy replacement of the separation column is allowed while preventing the operator from being in contact with the configuration related to the separation column.

### <Supplement>

The above respective configurations, functions, and the like may be achieved by the designing of some or all of them by, for example, an integrated circuit, and the like. In addition, the above respective configurations, functions, and the like may be achieved by software in such a manner that the processor interprets and executes the program that achieves each function.

### Reference Sign List

- 100: mass spectrometer
- 110: chromatograph
- 110a: column cartridge
- 110b: column cartridge
- 110c: column cartridge
- 111a: body
- 112a: upstream connection portion
- 113a: downstream connection portion
- 114a: handle
- 115a: separation column
- 120: switching device
- 130: detector
- 140: control device
- 150a: column installation position
- 151a: column oven
- 160a: upstream pipe
- 161a: upstream pipe movement mechanism
- 170a: downstream pipe
- 171a: downstream pipe movement mechanism
- 180: cover
- 181a: insertion hole

## Claims

1. A chromatograph comprising:
a separation column (115a) that incorporates a stationary phase;
a column cartridge (110a) that accommodates the separation column (115a) and is detachably provided in a predetermined column installation position (150a);
an upstream pipe (160a) that is detachably provided on the column cartridge (110a) in a state of being installed at the column installation position (150a), and configured to supply a mobile phase to the separation column (115a) of the column cartridge (110a);
a downstream pipe (170a) that is detachably provided on the column cartridge (110a) in a state of being installed at the column installation position (150a), and configured to deliver the mobile phase that has passed through the separation column (115a) of the column cartridge (110a); and being **characterized by**
an upstream pipe movement mechanism (161a) configured to move the upstream pipe (160a) in an axial direction to attach and detach the upstream pipe (160a) to and from the column cartridge (110a) in the state of being installed at the column installation position (150a);
a downstream pipe movement mechanism (171a) configured to move the downstream pipe (170a) in the axial direction to attach and detach the downstream pipe (170a) to and from the column cartridge (110a) in the state of being installed at the column installation position (150a), and
a cover (180) that is disposed apart from the column installation position (150a), the upstream pipe (160a), the downstream pipe (170a), the upstream pipe moving mechanism (161a), and the downstream pipe moving mechanism (171a) and integrally covers the column installation position (150a), the upstream pipe (160a), and the downstream pipe (170a) to separate an inner side and an outer side of the cover (180) from each other, wherein
the cover (180) has an insertion hole (181a) that penetrates the cover (180) and allows the column cartridge (110a) to be installed from the outer side of the cover (180) to the column installation position (150a).

2. The chromatograph according to claim 1, wherein
the chromatograph includes
a plurality of the column installation positions (150a) where a plurality of the column cartridges (110a) are capable of being installed, respectively, and
a plurality of the upstream pipes (160a) and a plurality of the downstream pipes (170a) that are detachably provided on the column cartridges (110a) in a state of being installed at the plurality of the column installation positions (150a), respectively,
the cover (180) integrally covers the plurality of the column installation positions (150a), the plurality of the upstream pipes (160a), and the plurality of the downstream pipes (170a) to separate the inner side and the outer side of the cover (180) from each other, and
the cover (180) has a plurality of the insertion holes (181a) that penetrate the cover (180) and allow the plurality of the column cartridges (110a) to be installed from the outer side of the cover (180) to the plurality of the column installation positions (150a) .

3. The chromatograph according to claim 1, wherein
the downstream pipe (170a) is connected to the column cartridge (110a) in association with the installation of the column cartridge at the column installation position (150a) via the insertion hole (181a), and
the upstream pipe (160a) is connected to the column cartridge (110a) by the upstream pipe movement mechanism (161a) thereafter.

4. The chromatograph according to claim 1, wherein
the upstream pipe (160a) is connected to the column cartridge (110a) in association with the installation of the column cartridge (110a) at the column installation position (150a) via the insertion hole (181a), and
the downstream pipe (170a) is connected to the column cartridge (110a) by the downstream pipe movement mechanism (171a) thereafter.

5. The chromatograph according to claim 1, wherein
the column cartridge (110a) includes a handle (114a) that protrudes outward from the insertion hole (181a) of the cover (180) in the state of being installed at the column installation position (150a).

## Patentansprüche

1. Chromatograph, umfassend:
eine Trennsäule (115a), die eine stationäre Phase enthält;
eine Säulenkartusche (110a), die die Trennsäule (115a) aufnimmt und in einer vorbestimmten Säuleninstallationsposition (150a) abnehmbar bereitgestellt ist;
ein Zulaufrohr (160a), das an der Säulenkartusche (110a) in einem Zustand abnehmbar bereitgestellt ist, in dem diese an der Säuleninstallationsposition (150a) installiert ist, und das dazu eingerichtet ist, eine mobile Phase zur Trennsäule (115a) der Säulenkartusche (110a) zuzuführen;
ein Ablaufrohr (170a), das an der Säulenkartusche (110a) in einem Zustand abnehmbar bereitgestellt ist, in dem diese an der Säuleninstallationsposition (150a) installiert ist, und das dazu eingerichtet ist, die mobile Phase, die die Trennsäule (115a) der Säulenkartusche (110a) durchlaufen hat, abzuführen; und
**gekennzeichnet durch**:
ein Zulaufrohr-Bewegungsmechanismus (161a), der dazu eingerichtet ist, das Zulaufrohr (160a) in axialer Richtung zu bewegen, um das Zulaufrohr (160a) an der Säulenkartusche (110a) in dem Zustand, in dem diese an der Säuleninstallationsposition (150a) installiert ist, anzubringen und abzunehmen;
ein Ablaufrohr-Bewegungsmechanismus (171a), der dazu eingerichtet ist, das Ablaufrohr (170a) in der axialen Richtung zu bewegen, um das Ablaufrohr (170a) an der Säulenkartusche (110a) in dem Zustand, in dem diese an der Säuleninstallationsposition (150a) installiert ist, anzubringen und abzunehmen, und
eine Abdeckung (180), die von der Säuleninstallationsposition (150a), dem Zulaufrohr (160a), dem Ablaufrohr (170a), dem Zulaufrohr-Bewegungsmechanismus (161a) und dem Ablaufrohr-Bewegungsmechanismus (171a) entfernt angeordnet ist und die Säuleninstallationsposition (150a), das Zulaufrohr (160a) und das Ablaufrohr (170a) einstückig abdeckt, um eine Innenseite und eine Außenseite der Abdeckung (180) voneinander zu trennen, wobei
die Abdeckung (180) ein Einführloch (181a) aufweist, das die Abdeckung (180) durchdringt und ermöglicht, dass die Säulenkartusche (110a) von der Außenseite der Abdeckung (180) zur Säuleninstallationsposition (150a) installiert wird.

2. Chromatograph nach Anspruch 1, wobei
der Chromatograph umfasst
mehrere Säuleninstallationspositionen (150a), an denen mehrere Säulenkartuschen (110a) jeweils installiert werden können, und
mehrere Zulaufrohre (160a) und mehrere Ablaufrohre (170a), die an den Säulenkartuschen (110a) in einem Zustand abnehmbar bereitgestellt sind, in dem diese jeweils an den mehreren Säuleninstallationspositionen (150a) installiert sind,
die Abdeckung (180) die mehreren Säuleninstallationspositionen (150a), die mehreren Zulaufrohre (160a) und die mehreren Ablaufrohre (170a) einstückig abdeckt, um die Innenseite und die Außenseite der Abdeckung (180) voneinander zu trennen, und
die Abdeckung (180) mehrere Einführlöcher (181a) aufweist, die die Abdeckung (180) durchdringen und ermöglichen, dass die mehreren Säulenkartuschen (110a) von der Außenseite der Abdeckung (180) zu den mehreren Säuleninstallationspositionen (150a) installiert werden.

3. Chromatograph nach Anspruch 1, wobei
das Ablaufrohr (170a) mit der Säulenkartusche (110a) in Verbindung mit der Installation der Säulenkartusche an der Säuleninstallationsposition (150a) über das Einführloch (181a) verbunden wird, und
das Zulaufrohr (160a) anschließend durch den Zulaufrohr-Bewegungsmechanismus (161a) mit der Säulenkartusche (110a) verbunden wird.

4. Chromatograph nach Anspruch 1, wobei
das Zulaufrohr (160a) mit der Säulenkartusche (110a) in Verbindung mit der Installation der Säulenkartusche (110a) an der Säuleninstallationsposition (150a) über das Einführloch (181a) verbunden wird, und
das Ablaufrohr (170a) anschließend durch den Ablaufrohr-Bewegungsmechanismus (171a) mit der Säulenkartusche (110a) verbunden wird.

5. Chromatograph nach Anspruch 1, wobei
die Säulenkartusche (110a) einen Griff (114a) umfasst, der im Zustand, in dem diese an der Säuleninstallationsposition (150a) installiert ist, aus dem Einführloch (181a) der Abdeckung (180) nach außen hervorsteht.

## Revendications

1. Chromatographe comprenant :
une colonne (115a) de séparation qui incorpore une phase stationnaire ;
une cartouche (110a) de colonne qui reçoit la colonne (115a) de séparation et est prévue détachable dans une position (150a) d'installation de colonne prédéterminée ;
un tuyau amont (160a) qui est prévu détachable sur la cartouche (110a) de colonne dans un état d'être installé à la position (150a) d'installation de colonne, et configuré pour amener une phase mobile jusqu'à la colonne (115a) de séparation de la cartouche (110a) de colonne ;
un tuyau aval (170a) qui est prévu détachable sur la cartouche (110a) de colonne dans un état d'être installé à la position (150a) d'installation de colonne, et configuré pour amener la phase mobile qui est passée à travers la colonne (115a) de séparation de la cartouche (110a) de colonne ;
et étant **caractérisé par**
un mécanisme (161a) de mouvement de tuyau amont configuré pour déplacer le tuyau amont (160a) dans un sens axial pour fixer et détacher le tuyau amont (160a) à et de la cartouche (110a) de colonne dans l'état d'être installé à la position (150a) d'installation de colonne ;
un mécanisme (171a) de mouvement de tuyau aval configuré pour déplacer le tuyau aval (170a) dans le sens axial pour fixer et détacher le tuyau aval (170a) à et de la cartouche (110a) de colonne dans l'état d'être installé à la position (150a) d'installation de colonne, et
un capot (180) qui est disposé à l'écart de la position (150a) d'installation de colonne, du tuyau amont (160a), du tuyau aval (170a), du mécanisme (161a) de mouvement de tuyau amont, et du mécanisme (171a) de mouvement de tuyau aval et recouvre intégralement la position (150a) d'installation de colonne, le tuyau amont (160a), et le tuyau aval (170a) pour séparer un côté intérieur et un côté extérieur du capot (180) l'un de l'autre, dans lequel
le capot (180) a un trou (181a) d'insertion qui pénètre le capot (180) et permet que la cartouche (110a) de colonne soit installée depuis le côté extérieur du capot (180) à la position (150a) d'installation de colonne.

2. Chromatographe selon la revendication 1, dans lequel
le chromatographe inclut
une pluralité des positions (150a) d'installation de colonne où une pluralité des cartouches (110a) de colonne sont aptes à être installées, respectivement, et
une pluralité des tuyaux amont (160a) et une pluralité des tuyaux aval (170a) qui sont prévus détachables sur les cartouches (110a) de colonne dans un état d'être installés à la pluralité des positions (150a) d'installation de colonne, respectivement,
le capot (180) recouvre intégralement la pluralité des positions (150a) d'installation de colonne, la pluralité des tuyaux amont (160a), et la pluralité des tuyaux aval (170a) pour séparer le côté intérieur et le côté extérieur du capot (180) l'un de l'autre, et
le capot (180) a une pluralité des trous (181a) d'insertion qui pénètrent le capot (180) et permettent que la pluralité des cartouches (110a) de colonne soient installées depuis le côté extérieur du capot (180) à la pluralité des positions (150a) d'installation de colonne.

3. Chromatographe selon la revendication 1, dans lequel
le tuyau aval (170a) est connecté à la cartouche (110a) de colonne en association avec l'installation de la cartouche de colonne à la position (150a) d'installation de colonne par le trou (181a) d'insertion, et
le tuyau amont (160a) est connecté à la cartouche (110a) de colonne par le mécanisme (161a) de mouvement de tuyau amont par la suite.

4. Chromatographe selon la revendication 1, dans lequel
le tuyau amont (160a) est connecté à la cartouche (110a) de colonne en association avec l'installation de la cartouche (110a) de colonne à la position (150a) d'installation de colonne par le trou (181a) d'insertion, et
le tuyau aval (170a) est connecté à la cartouche (110a) de colonne par le mécanisme (171a) de mouvement de tuyau aval par la suite.

5. Chromatographe selon la revendication 1, dans lequel
la cartouche (110a) de colonne inclut une poignée (114a) qui fait saillie vers l'extérieur depuis le trou (181a) d'insertion du capot (180) dans l'état d'être installée à la position (150a) d'installation de colonne.
